# EUROPEAN PATENT APPLICATION

(11) **EP 4 378 686 A1**
(43) Date of publication of application: **05.06.2024**
(21) Application number: 22849877.0
(22) Date of filing: 27.07.2022
(51) Int. Cl.: B32B 27/36, B32B 27/32, B32B 27/10, B32B 27/18, B32B 7/12, B32B 37/15, B32B 37/12

(54) **BIODEGRADABLE MULTI-LAYER FILM, MANUFACTURING METHOD THEREFOR, AND ECO-FRIENDLY PACKAGING MATERIAL CONTAINING SAME**

(30) Priority: 30.07.2021 KR 20210101043
(71) Applicant: CJ CheilJedang Corporation, Seoul 04560 (KR)
(72) Inventor: YOON, Ki Chull, Seoul 04560 (KR); CHUNG, Jin Su, Seoul 04560 (KR); MOON, Sang Gwon, Seoul 04560 (KR); SHIN, Soo An, Seoul 04560 (KR); PARK, Jeung Yil, Seoul 04560 (KR); KIM, Jeongsu, Seoul 04560 (KR)
(74) Representative: Dehns
(86) International application number: PCT/KR2022/011019
(87) International publication number: WO 2023/008901

(57) **Abstract**

The present invention provides a biodegradable multilayer film, a manufacturing method therefor, and an eco-friendly packaging material containing same, the biodegradable multilayer film comprising a base layer and a biodegradable resin layer, wherein the biodegradable resin layer includes a polyhydroxyalkanoate (PHA) resin, and the thermal bonding strength of the biodegradable resin layer is 0.5 kgf/15mm to 15 kgf/15mm, the water permeability is 3 g/m² · atm · day or less, and the oxygen permeability is 10 cc/m2 · atm · day or less. The biodegradable multilayer film can be biodegraded in natural conditions such as in soil and in the ocean, can improve barrier properties against moisture and oxygen without including aluminum or nylon materials, and can further improve adhesive properties. As such, the biodegradable multilayer film can be used as a packaging material in various fields such that a high-quality and eco-friendly packaging material is provided.

## Description

### Technical Field

The present invention relates to a biodegradable multilayer film, to a process for preparing the same, and to an environmentally friendly packaging material comprising the same.

### Background Art

Packaging materials commonly used are composed of a substrate layer for printing and surface protection, a barrier layer (blocking film) for blocking moisture and oxygen, and an inner layer for heat-fusion lamination and storing contents.

The packaging materials are designed to suit the purposes thereof such that the substrate layer is typically composed of a polyethylene terephthalate (PET) or polypropylene (PP) film and serves for packaging printing applications such as gravure, flexo, and screen and as a support layer to maintain the strength of the film in a multi-layer structure; the barrier layer comprises aluminum foil or a nylon layer and serves as a blocking layer; and the inner layer is composed of a low-density polyethylene (LDPE), linear low-density polyethylene (LLDPE), or cast polypropylene (CPP) layer for heat-fusion lamination and serves to store food and objects and maintain the shape thereof.

However, it is difficult to recycle these packaging materials. They have the problem of being difficult to completely decompose naturally during the landfill process or taking hundreds of years to decompose depending on their types. In particular, they are hardly decomposed in soil or sea, causing problems with air pollution as well as marine pollution.

In order to solve these problems, there has been a growing demand in recent years for an environmentally friendly packaging material that does not use non-degradable plastics such as PET and nylon, and aluminum as a metal component, each of which is not environmentally friendly, can easily maintain the lifespan and storage of the contents, and can be completely decomposed after use in nature or through landfill without damaging the natural environment.

Although a variety of biodegradable materials such as paper and biodegradable polymers such as polylactic acid (PLA) have been studied as an environmentally friendly packaging material, there is a problem in that it can be hardly used as a packaging material since it has a low barrier to oxygen or moisture, along with biodegradability.

Accordingly, there is a need to develop a biodegradable film and an environmentally friendly packaging material that are biodegradable in soil and sea and have excellent barrier properties against oxygen and moisture.

### [Prior Art Document]

### [Patent Document]

(Patent Document 1) Korean Publication Patent No. 2012-0103158

### Disclosure of Invention

### Technical Problem

An object of the present invention is to provide a biodegradable multilayer film that is biodegradable in natural conditions such as soil and sea, has excellent barrier properties to moisture and oxygen without containing aluminum or nylon materials, and has excellent adhesive properties.

Another object of the present invention is to provide a process for preparing a biodegradable multilayer film that has the above properties in an efficient manner.

Another object of the present invention is to provide an environmentally friendly packaging material that comprises the above multilayer film to have excellent lifespan characteristics and is capable of safely storing perishable products.

### Solution to Problem

The present invention provides a biodegradable multilayer film that comprises a substrate layer and a biodegradable resin layer, wherein the biodegradable resin layer comprises a polyhydroxyalkanoate (PHA) resin, the biodegradable resin layer has a heat-sealing strength of 0.5 to 15 kgf/15 mm, and the biodegradable multilayer film has a water vapor transmission rate of 3 g/m²·atm·day or less and an oxygen transmission rate of 10 cc/m²·atm·day or less.

In addition, the present invention provides a process for preparing a biodegradable multilayer film that comprises melt-extruding a polyhydroxyalkanoate (PHA) resin to form a biodegradable resin layer on a substrate layer, wherein the biodegradable resin layer has a heat-sealing strength of 0.5 to 15 kgf/15 mm and the biodegradable multilayer film has a water vapor transmission rate of 3 g/m²·atm·day or less and an oxygen transmission rate of 10 cc/m²·atm·day or less.

In addition, the present invention provides an environmentally friendly packaging material that comprises the above biodegradable multilayer film.

### Advantageous Effects of Invention

As the biodegradable multilayer film according to an embodiment of the present invention has a specific structure comprising a substrate layer and a biodegradable resin layer and contains a specific biodegradable component, it is biodegradable in natural conditions such as soil and sea, has enhanced barrier properties to moisture and oxygen without containing aluminum or nylon materials, and has further enhanced adhesive properties.

Meanwhile, the process for preparing a biodegradable multilayer film according to an embodiment of the present invention can provide a process for preparing a biodegradable multilayer film having the above characteristics in an efficient manner.

In addition, it is possible to design various structures depending on the purposes by readily combining a biodegradable resin layer and a barrier layer with various functions. In particular, when a co-extrusion method according to an embodiment of the present invention is adopted, a single material or different materials can be extruded at once to combine materials with various functions, and processability and productivity can be further enhanced.

Further, the biodegradable multilayer film has environmentally friendly features as it completely decomposes in both soil and sea and is capable of safely storing perishable products; thus, it can be used in various fields as a packaging material to provide a high-quality, environmentally friendly packaging material.

### Brief Description of Drawings

Fig. 1 is a cross-sectional view of a biodegradable multilayer film according to an embodiment of the present invention.
Fig. 2 is a cross-sectional view of a biodegradable multilayer film according to another embodiment of the present invention.
Fig. 3 is a cross-sectional view of a biodegradable multilayer film according to another embodiment of the present invention.
Fig. 4 is a cross-sectional view of a biodegradable multilayer film according to another embodiment of the present invention.

### Best Mode for Carrying out the Invention

Hereinafter, the present invention will be described in more detail.

The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In the present specification, a singular expression is interpreted to cover a singular or plural number that is interpreted in context unless otherwise specified.

In addition, all numbers expressing the physical properties, dimensions, reaction conditions, and the like of elements used herein are to be understood as being modified by the term "about" unless otherwise indicated.

Throughout the present specification, the terms first resin layer, second resin layer, first adhesive layer, second adhesive layer, or first, second, and the like are used to describe various components. But the components should not be limited by the terms. The terms are used only for the purpose of distinguishing one component from another.

In the present specification, in the case where an element is mentioned to be formed "on" or "under" another element, it means not only that one element is directly formed "on" or "under" another element, but also that one element is indirectly formed on or under another element with other element(s) interposed between them.

In addition, the references for "one side" and "the other side" or "on" and "under" of each component are explained based on the drawings. These terms are only for distinguishing components and may be interchanged with each other in actual application.

In addition, for the sake of description, the sizes of individual elements in the appended drawings may be exaggeratedly depicted and do not indicate the actual sizes. In addition, the same reference numerals refer to the same elements throughout the specification.

### [Biodegradable multilayer film]

The biodegradable multilayer film according to an embodiment of the present invention comprises a substrate layer and a biodegradable resin layer, wherein the biodegradable resin layer comprises a polyhydroxyalkanoate (PHA) resin, the biodegradable resin layer has a heat-sealing strength of 0.5 to 15 kgf/15 mm, and the biodegradable multilayer film has a water vapor transmission rate of 3 g/m²·atm·day or less and an oxygen transmission rate of 10 cc/m²·atm·day or less.

As the biodegradable multilayer film according to an embodiment of the present invention has the specific structure described above and contains the specific component that is biodegradable, the biodegradable multilayer film and an environmentally friendly packaging material comprising the same are biodegradable in natural conditions such as soil and sea, have enhanced barrier properties to moisture and oxygen without containing aluminum or nylon materials, whereby they are capable of safely storing perishable products, and has excellent adhesive properties. Thus, it has technical significance in that it is capable of providing a high-quality, environmentally friendly packaging material.

In addition, according to an embodiment of the present invention, the biodegradable multilayer film may further comprise a barrier layer, wherein the barrier layer may comprise an ethylene vinyl alcohol (EVOH) resin.

Specifically, the biodegradable multilayer film comprises a substrate layer, a barrier layer, and a biodegradable resin layer, wherein the biodegradable resin layer comprises a polyhydroxyalkanoate (PHA) resin, the barrier layer comprises an ethylene vinyl alcohol (EVOH) resin, the biodegradable resin layer has a heat-sealing strength of 0.5 to 15 kgf/15 mm, and the biodegradable multilayer film has a water vapor transmission rate of 3 g/m²·atm·day or less and an oxygen transmission rate of 10 cc/m²·atm·day or less.

When the biodegradable multilayer film comprises the barrier layer comprising an ethylene vinyl alcohol (EVOH) resin and the biodegradable resin layer comprising a polyhydroxyalkanoate (PHA) resin, not only can the heat-sealing strength of each of the barrier layer and the biodegradable resin layer be enhanced, but the interlayer delamination can also be minimized since the barrier layer and the biodegradable resin layer both contain a hydroxy (OH) functional group; thus, the barrier layer and the biodegradable resin layer have excellent compatibility with each other, and adhesive properties can be further enhanced.

Hereinafter, each layer of the biodegradable multilayer film will be described in detail.

### substrate layer

The biodegradable multilayer film of the present invention may comprise a substrate layer.

As the biodegradable multilayer film comprises a substrate layer, it is easy to print product information and designs, and it may be more advantageous for protecting the surface.

The substrate layer may comprise at least one selected from the group consisting of paper, a polyethylene terephthalate (PET) film, a polyimide (PI) film, a polypropylene (PP) film, and a polyethylene (PE) film. Specifically, it may comprise paper.

When the substrate layer comprises paper, it may be more advantageous for providing an environmentally friendly packaging material since it has better biodegradability than other plastic materials.

The substrate layer, such as a paper layer, may have a basis weight of 30 to 200 g/m². The substrate layer may have a thickness that varies depending on the thickness of the biodegradable multilayer film, but it may be, for example, 30 to 1,000 µm, for example, 30 to 500 µm, or, for example, 40 to 300 µm.

Meanwhile, the barrier layer or the biodegradable resin layer may be disposed on at least one side of the substrate layer.

In addition, an environmentally friendly blocking layer may be coated on the surface of the substrate layer to have moisture and/or oxygen barrier properties, or a functional coating layer having antistatic properties or adhesive properties may be further formed.

The functional coating layer may comprise a primer coating layer and an adhesive coating layer, which may have materials and physical properties that are commonly used as long as they do not impair the effect desired in the present invention.

For example, the functional coating layer may comprise a primer coating layer. In such a case, barrier properties against moisture and/or oxygen can be further enhanced, adhesion with the barrier layer or the biodegradable resin layer can be enhanced, and antistatic performance can be enhanced. In addition, when another layer such as an adhesive coating layer or a release layer is adopted on the other side of the primer coating layer, it is possible to prevent these coating liquids from permeating on the surface of the substrate (liquid permeation phenomenon).

The primer coating layer may comprise at least one having antistatic performance selected from the group consisting of ammonium-based compounds, phosphoric acid-based compounds, and polymers such as acrylic-based resins and urethane-based resins.

The adhesive coating layer is a coating layer to enhance adhesion and comprises at least one selected from the group consisting of, for example, polyhydroxyalkanoate (PHA), polysilicone-based compounds, polyvinyl alcohol (PVA), ethylene vinyl acetate (EVA), acrylic-based resins, and urethane-based resins.

The thickness of the functional coating layer may be appropriately adjusted depending on the use and purpose of the biodegradable multilayer film and may specifically be 15 nm to 50 nm, 20 nm to 45 nm, 25 nm to 40 nm, or 30 nm to 35 nm, but it is not limited thereto.

### Biodegradable resin layer

The biodegradable multilayer film of the present invention may comprise a biodegradable resin layer, which comprises a polyhydroxyalkanoate (hereinafter, referred to as PHA) resin.

The PHA resin has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

Specifically, the PHA resin is a natural thermoplastic polyester polymer that accumulates in microbial cells. Since it is a biodegradable material, it can be composted and finally decomposed into carbon dioxide, water, and organic waste without generating toxic waste. In particular, the PHA resin is biodegradable in soil and sea. Thus, when the biodegradable resin layer comprises the PHA resin, it is biodegradable under any environmental conditions, such as soil and sea, and has environmentally friendly characteristics. Thus, when the multilayer film comprises a biodegradable resin layer, which comprises the PHA resin, it has a great advantage in that it can be used in a variety of fields as an environmentally friendly packaging material.

A PHA resin may be formed by enzyme-catalyzed polymerization of one or more monomer repeat units in living cells.

The PHA resin may be a polyhydroxyalkanoate copolymer resin (hereinafter, referred to as a PHA copolymer), specifically, a copolymer comprising two or more different repeat units with the different repeat units randomly distributed in the polymer chain.

Examples of repeat units that may be contained in the PHA include 2-hydroxybutyrate, lactic acid, glycolic acid, 3-hydroxybutyrate (hereinafter, referred to as 3-HB), 3-hydroxypropionate (hereinafter, referred to as 3-HP), 3-hydroxyvalerate (hereinafter, referred to as 3-HV), 3-hydroxyhexanoate (hereinafter, referred to as 3-HH), 3-hydroxyheptanoate (hereinafter, referred to as 3-HHep), 3-hydroxyoctanoate (hereinafter, referred to as 3-HO), 3-hydroxynonanoate (hereinafter, referred to as 3-HN), 3-hydroxydecanoate (hereinafter, referred to as 3-HD), 3-hydroxydodecanoate (hereinafter, referred to as 3-HDd), 4-hydroxybutyrate (hereinafter, referred to as 4-HB), 4-hydroxyvalerate (hereinafter, referred to as 4-HV), 5-hydroxyvalerate (hereinafter, referred to as 5-HV), and 6-hydroxyhexanoate (hereinafter, referred to as 6-HH). The PHA resin may contain one or more repeat units selected from the above.

Specifically, the PHA resin may comprise one or more repeat units selected from the group consisting of 3-HB, 4-HB, 3-HP, 3-HH, 3-HV, 4-HV, 5-HV, and 6-HH.

More specifically, the PHA resin may comprise a 4-HB repeat unit. That is, the PHA resin may be a PHA copolymer comprising a 4-HB repeat unit.

In addition, the PHA resin may comprise isomers. For example, the PHA resin may comprise structural isomers, enantiomers, or geometric isomers. Specifically, the PHA resin may comprise structural isomers.

In addition, the PHA resin may be a PHA copolymer that comprises a 4-HB repeat unit and further comprises one repeat unit different from the 4-HB repeat unit, or two, three, four, five, six, or more repeat units different from each other.

According to an embodiment of the present invention, the PHA resin may comprise a polyhydroxyalkanoate copolymer resin comprising at least one repeat unit selected from the group consisting of 3-HB, 3-HP, 3-HH, 3-HV, 4-HV, 5-HV, and 6-HH, and a 4-HB repeat unit.

Specifically, the PHA copolymer may comprise a 4-HB repeat unit and further comprises one or more repeat units selected from the group consisting of a 3-HB repeat unit, a 3-HP repeat unit, a 3-HH repeat unit, a 3-HV repeat unit, a 4-HV repeat unit, a 5-HV repeat unit, and a 6-HH repeat unit. More specifically, the PHA resin may be a polyhydroxyalkanoate copolymer resin comprising a 3-HB repeat unit and a 4-HB repeat unit.

For example, the PHA resin may be poly-3-hydroxybutyrate-co-4-hydroxybutyrate (hereinafter, referred to as 3HB-co-4HB).

According to an embodiment of the present invention, it is important to adjust the content of the 4-HB repeat unit in the PHA copolymer.

That is, in order to achieve the physical properties desired in the present invention, in particular, to increase the biodegradability in soil and sea and to achieve excellent physical properties such as enhanced optical properties, thermal properties, and mechanical properties, the content of the 4-HB repeat unit in the PHA copolymer may be important.

More specifically, the PHA copolymer may comprise a 4-HB repeat unit in an amount of 0.1% by weight to 60% by weight based on the total weight of the PHA copolymer. For example, the content of the 4-HB repeat unit may be 0.1% by weight to 55% by weight, 0.5% by weight to 60% by weight, 0.5% by weight to 55% by weight, 1% by weight to 60% by weight, 1% by weight to 55% by weight, 1% by weight to 50% by weight, 2% by weight to 55% by weight, 3% by weight to 55% by weight, 3% by weight to 50% by weight, 5% by weight to 55% by weight, 5% by weight to 50% by weight, 10% by weight to 55% by weight, 10% by weight to 50% by weight, 1% by weight to 40% by weight, 1% by weight to 30% by weight, 1% by weight to 29% by weight, 1% by weight to 25% by weight, 1% by weight to 24% by weight, 2% by weight to 20% by weight, 2% by weight to 23% by weight, 3% by weight to 20% by weight, 3% by weight to 15% by weight, 4% by weight to 18% by weight, 5% by weight to 15% by weight, 8% by weight to 12% by weight, 9% by weight to 12% by weight, 15% by weight to 55% by weight, 15% by weight to 50% by weight, 20% by weight to 55% by weight, 20% by weight to 50% by weight, 25% by weight to 55% by weight, 25% by weight to 50% by weight, 35% by weight to 60% by weight, 40% by weight to 55% by weight, or 45% by weight to 55% by weight, based on the total weight of the PHA copolymer.

If the content of the 4-HB repeat unit satisfies the above range, the biodegradability in soil and sea may be increased, excellent optical properties may be maintained, the thermal properties of the material may be improved, and mechanical properties such as flexibility and strength may be further enhanced.

In addition, the PHA resin comprises at least one or more of a 4-HB repeat unit, and the content of the 4-HB repeat unit may be controlled to adjust the crystallinity of the PHA resin. That is, the PHA resin may be a PHA copolymer with controlled crystallinity.

The PHA resin whose crystallinity is adjusted may be one in which its crystallinity and amorphousness are adjusted as the irregularities are increased in its molecular structure. Specifically, the types and ratios of the monomers or the types and/or contents of the isomers may be adjusted.

The PHA resin may comprise a combination of two or more PHA resins having different crystallinities. That is, the PHA resin may be adjusted to have the content of a 4-HB repeat unit in the specific range by mixing two or more types of PHA resins having different crystallinities.

For example, the PHA resin comprises a mixed resin of a first PHA resin and a second PHA resin having different contents of a 4-HB repeat unit, and the PHA resin may be adjusted such that the content of a 4-HB repeat unit is 0.1 to 60% by weight based on the total weight of the PHA resin. Specific characteristics of the first PHA resin and the second PHA resin are described below.

Meanwhile, the PHA copolymer may comprise, for example, a 3-HB repeat unit in an amount of 20% by weight or more, 35% by weight or more, 40% by weight or more, 50% by weight or more, 60% by weight or more, 70% by weight or more, or 75% by weight or more, and 99% by weight or less, 98% by weight or less, 97% by weight or less, 96% by weight or less, 95% by weight or less, 93% by weight or less, 91% by weight or less, 90% by weight or less, 80% by weight or less, 70% by weight or less, 60% by weight or less, or 55% by weight or less, based on the total weight of the PHA copolymer.

Meanwhile, the PHA resin may have a glass transition temperature (Tg) of, for example, -45°C to 80°C, -35°C to 80°C, -30°C to 80°C, -25°C to 75°C, -20°C to 70°C, - 35°C to 5°C, -25°C to 5°C, -35°C to 0°C, -25°C to 0°C, -30°C to -10°C, -35°C to -15°C, - 35°C to -20°C, -20°C to 0°C, -15°C to 0°C, or -15°C to -5°C.

The crystallization temperature (Tc) of the PHA resin, for example, may not be measured or may be, for example, 70°C to 120°C, 75°C to 120°C, 75°C to 115°C, 75°C to 110°C, or 90°C to 110°C.

The melting temperature (Tm) of the PHA resin, for example, may not be measured or may be, for example, 100°C to 170°C, for example, 110°C to 150°C, or, for example, 120°C to 140°C.

The PHA resin may have a weight average molecular weight (Mw) of, for example, 10,000 g/mole to 1,200,000 g/mole. For example, the weight average molecular weight of the PHA resin may be 50,000 g/mole to 1,200,000 g/mole, 100,000 g/mole to 1,200,000 g/mole, 50,000 g/mole to 1,000,000 g/mole, 100,000 g/mole to 1,000,000 g/mole, 200,000 g/mole to 1,200,000 g/mole, 250,000 g/mole to 1,150,000 g/mole, 300,000 g/mole to 1,100,000 g/mole, 350,000 g/mole to 1,000,000 g/mole, 350,000 g/mole to 950,000 g/mole, 100,000 g/mole to 900,000 g/mole, 200,000 g/mole to 800,000 g/mole, 200,000 g/mole to 700,000 g/mole, 250,000 g/mole to 650,000 g/mole, 200,000 g/mole to 400,000 g/mole, 300,000 g/mole to 800,000 g/mole, 300,000 g/mole to 600,000 g/mole, 500,000 g/mole to 1,200,000 g/mole, 500,000 g/mole to 1,000,000 g/mole 550,000 g/mole to 1,050,000 g/mole, 550,000 g/mole to 900,000 g/mole, or 600,000 g/mole to 900,000 g/mole. Meanwhile, the biodegradable resin layer may be a single layer or may comprise two or more biodegradable resin layers.

When the biodegradable resin layer has two or more layers, it may comprise a first resin layer and a second resin layer.

When the biodegradable resin layer is a single layer, the thickness of the biodegradable resin layer may be 10 to 200 µm, for example, 15 to 150 µm, 20 to 100 µm, or 25 to 50 µm. When the biodegradable resin layer has two or more layers, the thickness of the first resin layer and the second resin layer may each be 5 to 100 µm, for example, 7 to 80 µm, 10 to 50 µm, or 12 to 25 µm.

The first resin layer and the second resin layer may comprise a first PHA resin and a second PHA resin, respectively. The first PHA resin and the second PHA resin may be distinguished in terms of the content of a 4-HB repeat unit, glass transition temperature (Tg), crystallization temperature (Tc), and melting temperature (Tm).

Specifically, the first resin layer comprises a first PHA resin. The first PHA resin may comprise a 4-HB repeat unit in an amount of, for example, 15% by weight to 60% by weight, 15% by weight to 55% by weight, 20% by weight to 55% by weight, 25% by weight to 55% by weight, 30% by weight to 55% by weight, 35% by weight to 55% by weight, 20% by weight to 50% by weight, 25% by weight to 50% by weight, 30% by weight to 50% by weight, 35% by weight to 50% by weight, or 20% by weight to 40% by weight, based on the total weight of the first PHA resin.

The glass transition temperature (Tg) of the first PHA resin may be -45°C to -10°C, -35°C to -10°C, -35°C to -15°C, -35°C to -20°C, or -30°C to -20°C.

The crystallization temperature (Tc) of the first PHA resin, for example, may not be measured or may be, for example, 60°C to 120°C, 60°C to 110°C, 70°C to 120°C, or 75°C to 115°C.

The melting temperature (Tm) of the first PHA resin, for example, may not be measured or may be, for example, 100°C to 170°C, 100°C to 160°C, 110°C to 160°C, or 120°C to 150°C.

The first PHA resin may have a weight average molecular weight (Mw) of, for example, 10,000 g/mole to 1,200,000 g/mole, 10,000 g/mole to 1,000,000 g/mole, 50,000 g/mole to 1,000,000 g/mole, 50,000 g/mole to 1,200,000 g/mole, for example, 70,000 g/mole to 1,000,000 g/mole, 50,000 g/mole to 1,000,000 g/mole, 200,000 g/mole to 1,200,000 g/mole, 300,000 g/mole to 1,000,000 g/mole, 100,000 g/mole to 900,000 g/mole, 500,000 g/mole to 900,000 g/mole, 200,000 g/mole to 800,000 g/mole, or 200,000 g/mole to 400,000 g/mole.

Meanwhile, the second resin layer comprises a second PHA resin. The second PHA resin may comprise a 4-HB repeat unit in an amount of 0.1% to 30% by weight based on the total weight of the second PHA resin. The second PHA resin may comprise a 4-HB repeat unit in an amount of, for example, 0.1% by weight to 30% by weight, 0.5% by weight to 30% by weight, 1% by weight to 30% by weight, 3% by weight to 30% by weight, 1% by weight to 28% by weight, 1% by weight to 25% by weight, 1% by weight to 24% by weight, 1% by weight to 20% by weight, 1% by weight to 15% by weight, 2% by weight to 25% by weight, 3% by weight to 25% by weight, 3% by weight to 24% by weight, 5% by weight to 24% by weight, 5% by weight to 20% by weight, greater than 5% by weight to less than 20% by weight, 7% by weight to 20% by weight, 10% by weight to 20% by weight, 15% by weight to 25% by weight, or 15% by weight to 24% by weight.

The first PHA resin and the second PHA resin may be different from each other in terms of the content of a 4-HB repeat unit.

The second PHA resin may have a glass transition temperature (Tg) of, for example, -30°C to 80°C, -30°C to 10°C, -25°C to 5°C, -25°C to 0°C, -20°C to 0°C, or -15°C to 0°C.

The glass transition temperature (Tg) of the first PHA resin and the glass transition temperature (Tg) of the second PHA resin may be different from each other.

The second PHA resin may have a crystallization temperature (Tc) of, for example, 70°C to 120°C, for example, 75°C to 115°C, or, for example, may not be measured.

The second PHA resin may have a melting temperature (Tm) of, for example, 100°C to 170°C, for example, 105°C to 165°C, for example, 110°C to 160°C, for example, 100°C to 150°C, for example, 115°C to 155°C, or, for example, 120°C to 150°C.

The second PHA resin may have a weight average molecular weight (Mw) of 10,000 g/mole to 1,200,000 g/mole, 50,000 g/mole to 1,200,000 g/mole, 70,000 g/mole to 1,000,000 g/mole, 50,000 g/mole to 1,100,000 g/mole, 100,000 g/mole to 1,000,000 g/mole, 300,000 g/mole to 1,000,000 g/mole, 100,000 g/mole to 900,000 g/mole, 200,000 g/mole to 800,000 g/mole, 200,000 g/mole to 600,000 g/mole, 200,000 g/mole to 400,000 g/mole, or 400,000 g/mole to 700,000 g/mole.

Specifically, the first PHA resin has a glass transition temperature (Tg) of -35°C to -15°C, the second PHA resin satisfies at least one characteristic selected from a glass transition temperature (Tg) of -15°C to 0°C, a crystallization temperature (Tc) of 80°C to 110°C, and a melting temperature (Tm) of 120°C to 160°C, and the glass transition temperature (Tg) of the first PHA resin and the glass transition temperature (Tg) of the second PHA resin may be different from each other. In addition, the crystallization temperature (Tc) and melting temperature (Tm) of the first PHA resin may not be measured.

If the first PHA resin and the second PHA resin each satisfy at least one of the content of a 4-HB repeat unit, glass transition temperature (Tg), crystallization temperature (Tc), and melting temperature (Tm) in the above ranges, it may be more advantageous for achieving the effect desired in the present invention.

In addition, the first PHA resin and the second PHA resin may each be a PHA resin whose crystallinity is adjusted.

For example, the first PHA resin may comprise an amorphous PHA resin (hereinafter, referred to as an aPHA resin), and the second PHA resin may comprise a semicrystalline PHA resin (hereinafter, referred to as an scPHA resin).

The aPHA resin and the scPHA resin may be distinguished in terms of the content of a 4-HB repeat unit, glass transition temperature (Tg), crystallization temperature (Tc), melting temperature (Tm), or the like.

The aPHA resin may comprise a 4-HB repeat unit in an amount of, for example, 25 to 50% by weight based on the total weight of the PHA resin.

The aPHA resin may have a glass transition temperature (Tg) of, for example, -35°C to -20°C.

The crystallization temperature (Tc) of the aPHA resin may not be measured.

The melting temperature (Tm) of the aPHA resin may not be measured.

The scPHA resin may comprise a 4-HB repeat unit in an amount of, for example, 1 to less than 25% by weight based on the total weight of the PHA resin.

The scPHA resin may have a glass transition temperature (Tg) of -20°C to 0°C.

The scPHA resin may have a crystallization temperature (Tc) of 75°C to 115°C.

The scPHA resin may have a melting temperature (Tm) of 110°C to 160°C.

If the biodegradable multilayer film according to an embodiment of the present invention comprises two or more layers comprising the first resin layer and the second resin layer, it may be more advantageous for providing various characteristics as compared with a single layer.

Specifically, the first resin layer comprising the first PHA resin may be advantageous for enhancing interlayer adhesion, and the second resin layer comprising the second PHA resin may be more advantageous for enhancing printability.

In addition, the first resin layer and the second resin layer may be distinguished in terms of the content of a 4-HB repeat unit contained in the PHA, glass transition temperature (Tg), crystallization temperature (Tc), and melting temperature (Tm) of the PHA.

In addition, the content of a 4-HB repeat unit contained in the PHA of the first resin layer may be more or less than the content of a 4-HB repeat unit contained in the PHA of the second resin layer. Preferably, the content of a 4-HB repeat unit contained in the PHA of the first resin layer may be more than the content of a 4-HB repeat unit contained in the PHA of the second resin layer.

Meanwhile, the biodegradable resin layer may further comprise at least one biodegradable resin selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and thermoplastic starch (TPS).

In addition, the biodegradable resin layer may further comprise at least one additive selected from the group consisting of slip agents, antioxidants, crosslinking agents, nucleating agents, fillers, stabilizers, and compatibilizers. For example, the additive may be employed in an amount of 0.5 to 30% by weight based on the total weight of the biodegradable resin layer.

The slip agent is an additive for enhancing the slip properties (slippery properties) during extrusion and for preventing film surfaces from sticking to each other.

The slip agent may be used as any commonly used slip agent as long as the effect of the present invention is not impaired. For example, the slip agent may be at least one selected from the group consisting of erucamide, oleamide, and stearamide.

The slip agent may be employed in an amount of, for example, 0.01 to 20% by weight, 0.01 to 15% by weight, 0.01 to 12% by weight, 0.01 to 10% by weight, 0.01 to 8% by weight, 0.01 to 5% by weight, 0.2 to 4.5% by weight, 0.2 to 4% by weight, or 0.5 to 3% by weight, based on the total weight of the biodegradable resin layer.

If the content of the slip agent satisfies the above range, the processability, productivity, and moldability may be further enhanced, and it may be more advantageous for achieving the desired effects of the present invention.

The antioxidant is an additive for preventing decomposition by ozone or oxygen, preventing oxidation during storage, and preventing deterioration of the physical properties of a film.

The antioxidant may be used as any commonly used antioxidant as long as the effect of the present invention is not impaired.

Specifically, the antioxidant may comprise at least one selected from the group consisting of hindered phenol-based antioxidants and phosphite-based (phosphorus-based) antioxidants.

The hindered phenol-based antioxidant may comprise, for example, at least one selected from the group consisting of 4,4'-methylene-bis(2,6-di-t-butylphenol), octadecyl-3-(3,5-di-t-butyl-4-hydroxyphenyl)propionate, pentaerythritol tetrakis[3-(3,5-di-t-butyl-4-hydroxyphenyl)propionate), and 3,9-bis[2-[3-(3-tert-butyl-4-hydroxy-5-methylphenyl)propionyloxy]-1,1-dimethylethyl]-2,4,8,10-tetraoxaspiro[5.5]undecane.

The phosphite-based (phosphorus-based) antioxidant may comprise, for example, at least one selected from the group consisting of tris-(2,4-di-t-butylphenyl)phosphite, bis-(2,4-di-t-butylphenyl)pentaerythritol-diphosphite, bis-(2,6-di-t-butyl-4-methylphenyl)pentaerythritol-diphosphite, distearyl-pentaerythritol-diphosphite, [bis(2,4-di-t-butyl-5-methylphenoxy)phosphino]biphenyl, and N,N-bis[2-[[2,4,8,10-tetrakis(1,1-dimethylethyl)dibenzo[d,f][1,3,2] dioxyphosphepin-6-yl] oxy] -ethyl] ethanamine.

The antioxidant may be employed in an amount of, for example, 0.01 to 20% by weight, 0.01 to 15% by weight, 0.01 to 12% by weight, 0.01 to 10% by weight, 0.01 to 8% by weight, 0.01 to 5% by weight, 0.2 to 4.5% by weight, 0.2 to 4% by weight, or 0.5 to 3% by weight, based on the total weight of the biodegradable resin layer.

If the content of the antioxidant satisfies the above range, the physical properties of a film may be enhanced, and it may be more advantageous for achieving the desired effects of the present invention.

The crosslinking agent is an additive for modifying the properties of the PHA and increasing the molecular weight of the resin. Common crosslinking agents may be used as long as the effects of the present invention are not impaired.

For example, the crosslinking agent may be at least one selected from the group consisting of fatty acid esters, natural oil containing an epoxy group (epoxylated), diallyl phthalate, pentaerythritol tetraacrylate, trimethylolpropane triacrylate, pentaerythritol triacrylate, dipentaerythritol pentaacrylate, diethylene glycol dimethacrylate, and bis(2-methacryloxyethyl)phosphate.

The crosslinking agent may be employed in an amount of, for example, 0.01 to 20% by weight, 0.01 to 15% by weight, 0.01 to 12% by weight, 0.01 to 10% by weight, 0.01 to 8% by weight, 0.01 to 5% by weight, 0.2 to 4.5% by weight, 0.2 to 4% by weight, or 0.5 to 3% by weight, based on the total weight of the biodegradable resin layer.

If the content of the crosslinking agent satisfies the above range, the physical properties of a film may be enhanced, and it may be more advantageous for achieving the desired effects of the present invention.

The nucleating agent is an additive for supplementing or changing the crystallization morphology of a polymer and for enhancing the crystallization (solidification) rate when a melt of the polymer is cooled. In particular, since the PHA resin used in the present invention has a low crystallization rate, the process may not be readily carried out since stickiness is maintained for a long period of time. If the nucleating agent is used to solve this problem, the crystallization rate can be increased to further enhance the processability, moldability, and productivity, and it is possible to effectively achieve the desired physical properties.

The nucleating agent may be used as any commonly used nucleating agent as long as the effects of the present invention are not impaired.

Specifically, the nucleating agent may be an elemental substance (pure substance), a metal compound comprising a complex oxide, such as carbon black, calcium carbonate, synthetic silicic acid and salts, silica, zinc white, clay, kaolin, basic magnesium carbonate, mica, talc, quartz powder, diatomite, dolomite powder, titanium oxide, zinc oxide, antimony oxide, barium sulfate, calcium sulfate, alumina, calcium silicate, metal salts of organic phosphorus, and boron nitride; a low molecular weight organic compound having a metal carboxylate group, such as a metal salt of octylic acid, toluic acid, heptanoic acid, pelargonic acid, lauric acid, myristic acid, palmitic acid, stearic acid, behenic acid, cerotic acid, montanic acid, melissic acid, benzene acid, p-tert-butylbenzene acid, terephthalic acid, terephthalic acid monomethyl ester, isophthalic acid, and isophthalic acid monomethyl ester; a polymeric organic compound having a metal carboxylate group, such as a salt of a carboxyl group-containing polyethylene obtained by oxidation of polyethylene, a carboxyl group-containing polypropylene obtained by oxidation of polypropylene, a copolymer of an acrylic acid or methacrylic acid and an olefin (e.g., ethylene, propylene, and butene-1), a copolymer of an acrylic or methacrylic acid and styrene, a copolymer of an olefin and maleic anhydride, and a copolymer of styrene and maleic anhydride; a polymeric organic compound, such as an alpha-olefin having 5 or more carbon atoms branched to a carbon atom in position 3 (e.g., 3,3-dimethylbutene-1,3-methylbutene-1,3-methylpentene-1,3-methylhexene-1 and 3,5,5-trimethylhexene-1), a polymer of vinylcycloalkanes (e.g., vinylcyclopentane, vinylcyclohexane, and vinylnorbomane), polyalkylene glycols (e.g., polyethylene glycol and polypropylene glycol), poly(glycolic acid), cellulose, a cellulose ester, and a cellulose ether; phosphoric acid or phosphorous acid and a metal salt thereof, such as diphenyl phosphate, diphenyl phosphite, a metal salt of bis(4-tert-butylphenyl)phosphate, and methylene bis-(2,4-tert-butylphenyl) phosphate; a sorbitol derivative, such as bis(p-methylbenzylidene) sorbitol and bis(p-ethylbenzylidene) sorbitol; and thioglycolic anhydride, p-toluenesulfonic acid, and a metal salt thereof. The nucleating agents may be used alone or in combination thereof.

The nucleating agent may be employed in an amount of, for example, 0.01 to 20% by weight, 0.01 to 15% by weight, 0.01 to 12% by weight, 0.01 to 10% by weight, 0.01 to 8% by weight, 0.01 to 5% by weight, 0.2 to 4.5% by weight, 0.2 to 4% by weight, or 0.5 to 3% by weight, based on the total weight of the biodegradable resin layer.

If the content of the nucleating agent satisfies the above range, the crystallization rate can be increased to enhance the moldability, and it is possible to further enhance the productivity and processability of a film.

The filler is an additive to increase moldability by increasing the crystallization rate during a molding procedure. The filler may be used as any commonly used filler as long as the effect of the present invention is not impaired. It may comprise at least one selected from the group consisting of calcium carbonate, such as light or heavy calcium carbonate, silica, talc, kaolin, barium sulfate, clay, calcium oxide, magnesium hydroxide, titanium oxide, carbon black, and glass fibers.

The filler, especially an inorganic filler, may have an average particle size of 0.5 µm to 5 µm. If the average particle size of the inorganic filler is less than 0.5 µm, it is difficult for the particles to be dispersed. If it exceeds 5 µm, the size of the particles becomes excessively large, which may impair the effects of the present invention. The filler may be employed in an amount of, for example, 0.01 to 20% by weight, 0.01 to 15% by weight, 0.01 to 12% by weight, 0.01 to 10% by weight, 0.01 to 8% by weight, 0.01 to 5% by weight, 0.2 to 4.5% by weight, 0.2 to 4% by weight, or 0.5 to 3% by weight, based on the total weight of the biodegradable resin layer.

If the content of the filler satisfies the above range, it may be more advantageous for achieving the desired effects of the present invention.

The stabilizer is an additive for protecting against oxidation and heat and preventing color change. The stabilizer may be used as any commonly used stabilizer as long as the effect of the present invention is not impaired.

Specifically, the stabilizer may be one selected from the group consisting of trimethyl phosphate, triphenyl phosphate, trimethyl phosphine, phosphoric acid, and phosphorous acid.

The stabilizer may be employed in an amount of, for example, 0.01 to 20% by weight, 0.01 to 15% by weight, 0.01 to 12% by weight, 0.01 to 10% by weight, 0.01 to 8% by weight, 0.01 to 5% by weight, 0.2 to 4.5% by weight, 0.2 to 4% by weight, or 0.5 to 3% by weight, based on the total weight of the biodegradable resin layer.

If the content of the stabilizer satisfies the above range, it may be more advantageous for achieving the desired effects of the present invention.

In addition, the compatibilizer is an additive for imparting compatibility by removing heterogeneity between resins.

The compatibilizer may be used as any commonly used compatibilizer as long as the effect of the present invention is not impaired.

Specifically, the compatibilizer may comprise at least one selected from the group consisting of polyvinyl acetates (PVAc), isocyanates, polypropylene carbonates, glycidyl methacrylates, ethylene vinyl alcohols, polyvinyl alcohols (PVA), ethylene vinyl acetates, and maleic anhydrides.

The compatibilizer may be employed in an amount of, for example, 0.01 to 20% by weight, 0.01 to 15% by weight, 0.01 to 12% by weight, 0.01 to 10% by weight, 0.01 to 8% by weight, 0.01 to 5% by weight, 0.2 to 4.5% by weight, 0.2 to 4% by weight, or 0.5 to 3% by weight, based on the total weight of the biodegradable resin layer.

If the content of the compatibilizer satisfies the above range, the physical properties of a film may be enhanced by increasing the compatibility between the resins used, and it may be more advantageous for achieving the desired effects of the present invention.

### Barrier layer

The biodegradable multilayer film of the present invention may comprise a barrier layer to block moisture and oxygen.

In addition, the barrier layer may impart advantages such as reduced permeability to moisture and oxygen, good resistance to oil, and rigidity to the article substrate.

The barrier layer may comprise an ethylene vinyl alcohol (hereinafter, referred to as EVOH) resin. The EVOH resin may be an ethylene vinyl alcohol copolymer resin.

As the barrier layer comprises an EVOH resin, a layer for blocking moisture and oxygen may be formed, and it may be more advantageous for enabling the biodegradable multilayer film to have a water vapor transmission rate of 3 g/m²·atm·day or less and an oxygen transmission rate of 10 cc/m²·atm·day or less.

In particular, an embodiment of the present invention is characterized in that the barrier layer does not comprise an aluminum or nylon material; rather, it uses an EVOH resin as an environmentally friendly material to have excellent barrier properties against moisture and oxygen.

Further, since the EVOH resin contains a hydroxy (OH) functional group, it has excellent compatibility with a biodegradable resin layer comprising a PHA resin containing an OH functional group, whereby it is possible to minimize interlayer delamination between the barrier layer and the biodegradable resin layer and enhance adhesive properties. In addition, the barrier layer comprising the EVOH resin and the biodegradable resin layer comprising the PHA resin can be easily co-extruded in the process, whereby it is possible to further enhance processability and productivity.

Meanwhile, as the content of ethylene groups and the molecular weight of the EVOH resin are controlled, the EVOH resin can further enhance the physical properties of the biodegradable multilayer film.

The content of ethylene groups in the EVOH resin may be, for example, 10 to 70% by weight, for example, 20 to 60% by weight, or, for example, 25 to 50% by weight. When the content of ethylene groups in the EVOH resin satisfies the above range, barrier properties of blocking moisture and oxygen can be enhanced.

The barrier layer may be positioned on the substrate layer.

In addition, the barrier layer may be positioned on at least one side of the biodegradable resin layer.

The weight of the barrier layer may be 10% by weight or less based on the total weight of the biodegradable multilayer film. The barrier layer has excellent barrier properties to moisture and oxygen even with a low weight (content).

The barrier layer may have a thickness of 5 to 50 µm. For example, the thickness of the barrier layer may be 5 µm to 40 µm, 5 µm to 35 µm, or 5 µm to 30 µm. As the thickness of the barrier layer satisfies the above range, barrier properties to moisture and oxygen and productivity can be further enhanced. If the thickness of the barrier layer is thinner than the above range, it is difficult to have sufficient barrier properties. If it is thicker than the above range, there may be a problem in that the process cost is high, and the productivity is low.

The barrier layer and the biodegradable resin layer may be formed by co-extrusion on the substrate layer or may be formed by lamination on the substrate layer.

### Adhesive layer

The biodegradable multilayer film of the present invention may further comprise an adhesive layer.

According to an embodiment of the present invention, when the barrier layer and the biodegradable resin layer are formed by lamination on the substrate layer, an adhesive layer may be interposed between the substrate layer, the biodegradable resin layer, and the barrier layer.

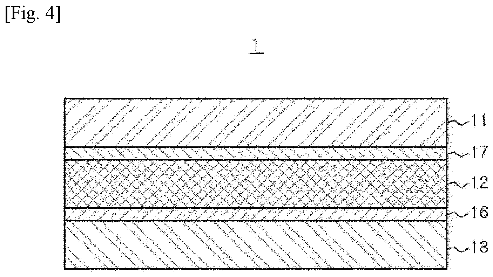

For example, referring to Fig. 4, the biodegradable multilayer film (1) comprises a substrate layer (13), a barrier layer (12) disposed on the substrate layer, and a biodegradable resin layer (11) disposed on the barrier layer (12). It may comprise a first adhesive layer (16) between the substrate layer (13) and the barrier layer (12); and a second adhesive layer (17) between the barrier layer (12) and the biodegradable resin layer (11).

In addition, the biodegradable multilayer film comprises the substrate layer, the biodegradable resin layer disposed on the substrate layer, and the barrier layer disposed on the biodegradable resin layer, and it may comprise the first adhesive layer and the second adhesive layer interposed between them, respectively.

In addition, when the biodegradable multilayer film comprises a first resin layer and a second resin layer as the biodegradable resin layer, and the first resin layer and the second resin layer are formed by lamination on the substrate layer, the adhesive layer may also be formed on at least one side of each of the first resin layer and the second resin layer.

The adhesive layer has excellent adhesive strength and can be selected in various ways within a range that does not impair the effect of the present invention. For example, the adhesive layer may comprise at least one selected from the group consisting of polyhydroxyalkanoate (PHA), polysilicone-based compounds, polyvinyl alcohol (PVA), ethylene vinyl acetate (EVA), acrylic resins, and urethane-based resins.

The adhesive layer may have a thickness of 5 µm to 20 µm, 5 µm to 15 µm, or 5 µm to 10 µm.

### Polymer resin layer

The biodegradable multilayer film of the present invention may further comprise a polymer resin layer.

The biodegradable multilayer film may further comprise at least one polymer resin layer that comprises at least one selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), thermoplastic starch (TPS), polypropylene (PP), polyethylene terephthalate (PET), and polyethylene (PE).

Specifically, the biodegradable multilayer film may further comprise at least one polymer resin layer that comprises at least one selected from the group consisting of polybutylene adipate terephthalate (PBAT), polylactic acid (PLA), polybutylene succinate (PBS), thermoplastic starch (TPS), polypropylene (PP), polyethylene terephthalate (PET), and polyethylene (PE).

The polymer resin layer may be formed on the barrier layer, on the biodegradable resin layer, or on both.

For example, the polymer resin layer may be formed on the barrier layer, and the polymer resin layer may be selected from the group consisting of polybutylene adipate terephthalate (PBAT), polylactic acid (PLA), polybutylene succinate (PBS), thermoplastic starch (TPS), and polypropylene (PP). Specifically, the polymer resin layer may be selected from the group consisting of polybutylene adipate terephthalate (PBAT), polylactic acid (PLA), polybutylene succinate (PBS), and polypropylene (PP). In addition, the polymer resin layer may be selected from the group consisting of polybutylene adipate terephthalate (PBAT), polylactic acid (PLA), polybutylene succinate (PBS), and thermoplastic starch (TPS) from the viewpoint of biodegradability.

In addition, when the biodegradable multilayer film comprises a first resin layer and a second resin layer as the biodegradable resin layer, the polymer resin layer may be formed on at least one side of each of the first resin layer and the second resin layer.

The polymer resin layer may have a thickness of 5 to 50 µm. For example, the thickness of the polymer resin layer may be 5 µm to 40 µm, 5 µm to 35 µm, or 5 µm to 30 µm.

### Various structures of the biodegradable multilayer film

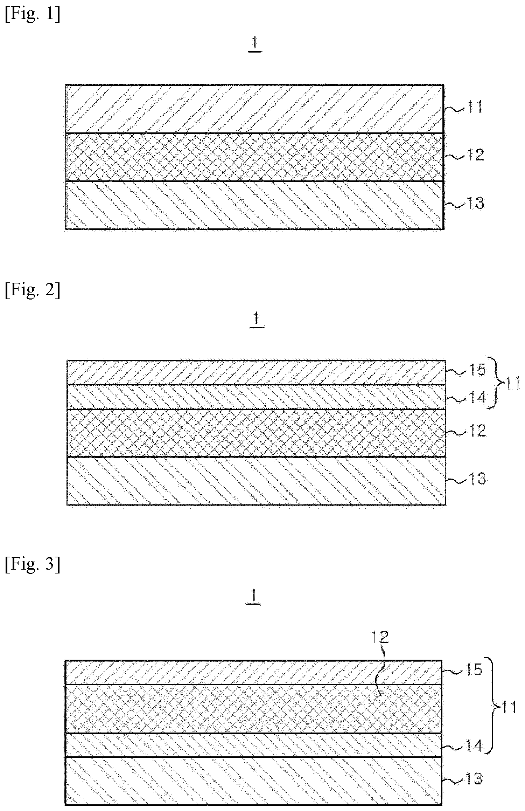

Figs. 1 to 4 show cross-sectional views of biodegradable multilayer films in various structures according to embodiments of the present invention.

First, the biodegradable multilayer film (1) according to an embodiment of the present invention may comprise a substrate layer (13) and a biodegradable resin layer (11) disposed on the substrate layer (13).

In addition, the biodegradable multilayer film (1) may further comprise a barrier layer (12).

Specifically, the barrier layer (12) may be disposed on the substrate layer (13), for example, interposed between the substrate layer (13) and the biodegradable resin layer (11).

In addition, the barrier layer (12) may be disposed on the biodegradable resin layer (11).

Referring to Fig. 1, the biodegradable multilayer film (1) according to an embodiment of the present invention may comprise a substrate layer (13), a barrier layer (12) disposed on the substrate layer (13), and a biodegradable resin layer (11) disposed on the barrier layer (12).

The biodegradable multilayer film according to another embodiment may comprise a substrate layer, a biodegradable resin layer disposed on the substrate layer, and a barrier layer disposed on the biodegradable resin layer.

The barrier layer (12) and the biodegradable resin layer (11) may be formed by co-extrusion on the substrate layer (13) or may be formed by lamination on the substrate layer (13).

According to an embodiment, when the barrier layer (12) and the biodegradable resin layer (11) are formed by lamination on the substrate layer (13), referring back to Fig. 4, the biodegradable multilayer film (1) comprises the substrate layer (13), the barrier layer (12) disposed on the substrate layer, and the biodegradable resin layer (11) disposed on the barrier layer (12). It may comprise a first adhesive layer (16) between the substrate layer (13) and the barrier layer (12); and a second adhesive layer (17) between the barrier layer (12) and the biodegradable resin layer (11).

According to another embodiment, the biodegradable multilayer film comprises a substrate layer, a biodegradable resin layer disposed on the substrate layer, and a barrier layer disposed on the biodegradable resin layer, and it may comprise a first adhesive layer and a second adhesive layer interposed between them, respectively.

In addition, referring to Fig. 2, when the biodegradable multilayer film (1) comprises a biodegradable resin layer (11) comprising a first resin layer and a second resin layer, the biodegradable multilayer film (1) may comprise a substrate layer (13), a barrier layer (12) disposed on the substrate layer, a first resin layer (14) disposed on the barrier layer (12), and a second resin layer (15) disposed on the first resin layer (14).

For example, the biodegradable multilayer film may have a structure of substrate layer/barrier layer/first resin layer/second resin layer; substrate layer/barrier layer/second resin layer/first resin layer; substrate layer/first resin layer/barrier layer/second resin layer; substrate layer/second resin layer/barrier layer/first resin layer; substrate layer/first resin layer/second resin layer/barrier layer; or substrate layer/second resin layer/first resin layer/barrier layer.

More specifically, referring to Fig. 3, the substrate layer (13) comprises paper, and the biodegradable multilayer film may have a structure of substrate layer (13)/first resin layer (14)/barrier layer (12)/second resin layer (15); or substrate layer/second resin layer/barrier layer/first resin layer.

The biodegradable multilayer film may comprise, for example, three or more layers, for example, 3 to 11 layers, and have a total thickness of 30 µm to 350 µm, for example, 30 µm to 150 µm.

The barrier layer may account for 10% or less of the thickness of the biodegradable multilayer film.

The ratio of the total thickness of the biodegradable resin layer and the substrate layer and the thickness of the barrier layer may be 90: 10 to 99: 1.

The thickness ratio of the biodegradable resin layer and the barrier layer may be 1:0.1 to 0.5.

In addition, the thickness ratio of the paper layer and the biodegradable resin layer to the barrier layer may be 1:0.01 to 0.1.

The biodegradable resin layer may have a thickness of 10 to 100 µm.

Meanwhile, the thickness ratio of the first resin layer to the second resin layer may be 1:0.5 to 1.5. When the thickness ratio of the first resin layer and the second resin layer satisfies the above range, it may be advantageous in terms of controlling adhesive strength and film strength.

### Physical properties of the biodegradable multilayer film

The multilayer film according to an embodiment of the present invention can be biodegraded by any one of microorganisms, moisture, oxygen, light, and heat, and it is characterized by low water vapor transmission rate and oxygen transmission rate and excellent adhesive properties.

Specifically, the biodegradable multilayer film may have a water vapor transmission rate (WVTR) of, for example, 3 g/m²·atm·day or less, 2.5 g/m²·atm·day or less, 2 g/m²·atm·day or less, 1 g/m²·atm· day or less, 0.8 g/m²·atm·day or less, 0.7 g/m²··atm·day or less, 0.6 g/m²·atm·day or less, or 0.5 g/m²·atm·day or less.

The water vapor transmission rate may be measured, for example, at 38 ± 0.5°C and 90 ± 2% relative humidity using a Permatran-w3/33 water vapor transmission rate meter of Mocon.

In addition, the biodegradable multilayer film may have an oxygen transmission rate (OTR) of, for example, 10 cc/m²·atm·day or less, 5 cc/m²·atm·day or less, 3 cc/m²·atm·day or less, 2 cc/m²·atm·day or less, 1 cc/m²·atm·day or less, 0.5 cc/m²·atm·day or less, 0.4 cc/m²·atm·day or less, 0.3 cc/m²·atm·day or less, or 0.2 cc/m²·atm·day or less.

The oxygen transmission rate (OTR) may be measured at 23 ± 0.5°C using an OX2/230 oxygen transmission rate meter of Labthink.

In addition, the biodegradable multilayer film may have a tensile strength of, for example, 10 to 50 MPa, or, for example, 20 to 40 MPa.

The biodegradable multilayer film is cut to a specimen of 100 mm in length and 15 mm in width and mounted to a universal testing machine (UTM; model name 5966) of INSTRON at a chuck spacing of 50 mm in accordance with ASTM-D882. Testing is performed at a tensile speed of 200 mm/minute at a room temperature of 25°C, and the tensile strength is measured with a program installed in the device.

If the tensile strength satisfies the above range, it is possible to enhance the productivity, processability, and moldability of the biodegradable multilayer film at the same time.

Meanwhile, the biodegradable resin layer may have a heat-sealing strength of 0.5 to 15 kgf/15 mm, 1 to 10 kgf/15 mm, 3 to 10 kgf/15 mm, or 4 to 8 kgf/15 mm.

When the biodegradable resin layer comprises a first resin layer and a second resin layer, the heat-sealing strength of the first resin layer may be 1 to 15 kgf/15 mm, 3 to 10 kgf/15 mm, 3 to 8 kgf/15 mm, or 4 to 8 kgf/15 mm. In addition, the heat-sealing strength of the second resin layer may be 1 to 12 kgf/15 mm, 1 to 10 kgf/15 mm, 3 to 10 kgf/15 mm, or 3 to 7 kgf/15 mm.

In addition, the barrier layer may have a heat-sealing strength of 0.5 to 10 kgf/15 mm, 0.8 to 8 kgf/15 mm, 1 to 8 kgf/15 mm, or 1 to 5 kgf/15 mm.

The heat-sealing strength may be measured, for example, using an LD5 universal tensile tester of LLOYD at a grip spacing of 50 mm, a speed of 100 mm/minute, and a sample width of 15 mm.

When the heat-sealing strength of the biodegradable resin layer and that of the barrier layer each satisfy the above ranges, the interlayer adhesion properties are excellent, thereby preventing each layer from being delaminated, and further enhancing processability and productivity.

Meanwhile, the biodegradable multilayer film may have excellent optical properties.

Specifically, the biodegradable multilayer film may have a haze of 20% or less, 15% or less, 10% or less, 7% or less, 6% or less, or 5% or less. If the haze exceeds the above range, the transparency of the biodegradable multilayer film is significantly reduced, which may limit its use for packaging purposes, for example, where the contents inside the packaging material are visible.

In addition, the biodegradable multilayer film may have a light transmittance of 85% or more, 88% or more, or 90% or more.

Further, the biodegradable multilayer film is characterized by a biodegradability of 90% or more in soil and sea. The biodegradability indicates the rate of decomposition as compared with the standard material (e.g., cellulose) in the same period. The Ministry of Environment of Korea defines a biodegradable material whose biodegradability is 90% or higher for 180 days, or 60% or more for 45 days, as compared with the standard material. Specifically, it is based on biodegradability measured according to composting conditions (ISO 14855-1).

### [Process for preparing a biodegradable multilayer film]

The process for preparing a biodegradable multilayer film according to an embodiment of the present invention comprises melt-extruding a polyhydroxyalkanoate (PHA) resin to form a biodegradable resin layer on a substrate layer, wherein the biodegradable resin layer has a heat-sealing strength of 0.5 to 15 kgf/15 mm, and the biodegradable multilayer film has a water vapor transmission rate of 3 g/m²·atm·day or less and an oxygen transmission rate of 10 cc/m²·atm·day or less.

In addition, the process for preparing a biodegradable multilayer film further comprises melt-extruding an ethylene vinyl alcohol (EVOH) resin to form a barrier layer, wherein the biodegradable resin layer and the barrier layer may be formed by melt-co-extruding the polyhydroxyalkanoate (PHA) resin and the ethylene vinyl alcohol (EVOH) resin on the substrate layer, or by melt-extruding each of them and laminating them on the substrate layer.

Specifically, the process for preparing a biodegradable multilayer film may comprise melt-co-extruding a polyhydroxyalkanoate (PHA) resin and an ethylene vinyl alcohol (EVOH) resin to form a biodegradable resin layer and a barrier layer on a substrate layer.

According to another embodiment of the present invention, the process for preparing a biodegradable multilayer film may comprise melt-extruding a polyhydroxyalkanoate (PHA) resin and an ethylene vinyl alcohol (EVOH) resin, respectively, and laminating them on a substrate layer to form a biodegradable resin layer and a barrier layer.

The process for preparing a biodegradable multilayer film can design various structures depending on the purposes by combining the structure of the multilayer film as well as materials with various functions in an efficient manner. In particular, when a co-extrusion method according to an embodiment of the present invention is adopted, it is more advantageous for preparing a multilayer film by extruding a single material or different materials at once to combine materials with various functions. Thus, it is possible to further enhance processability and productivity in an efficient manner.

Hereinafter, the process for preparing a biodegradable multilayer film will be described in detail.

The process for preparing a biodegradable multilayer film may comprise melt-extruding a PHA resin to form a biodegradable resin layer on a substrate layer.

In addition, the process for preparing a biodegradable multilayer film may comprise melt-co-extruding a PHA resin and an EVOH resin to form a biodegradable resin layer and a barrier layer on a substrate layer.

The PHA resin and the EVOH resin are as described above.

The PHA resin and the EVOH resin may each be in the form of powder, granules, or pellets. Specifically, the PHA resin and the EVOH resin may each be in the form of pellets.

When the PHA resin and the EVOH resin are each in the form of pellets, each resin may be cooled to, for example, 75°C or lower, 30°C or lower, or 5°C or lower, and then the cooled resin may be cut to produce pellets.

The cutting step may be carried out using a pellet cutter without limitations as long as it is commonly used in the art, and the pellets may have various shapes.

In addition, a step of drying the pellets may be carried out. The drying may be carried out at 30°C to 100°C for 2 hours to 12 hours. Specifically, the drying may be carried out at 35°C to 95°C, 40°C to 90°C, or 45°C to 85°C, for 3 hours to 12 hours or 4 hours to 10 hours. As the drying step conditions of the pellets satisfy the above range, quality may be further enhanced.

During the melt co-extrusion, the extrusion temperatures of the PHA resin and the EVOH resin may be individually controlled. The melt co-extrusion may be carried out at a temperature of 120°C to 250°C.

Specifically, the extrusion temperature of the PHA resin and the extrusion temperature of the EVOH resin may be the same or different.

The extrusion temperature of the PHA resin may be, for example, 120°C to 250°C, 120°C to 200°C, 140°C to 200°C, 140°C to 190°C, 140°C to 180°C, or 140°C to 170°C.

The extrusion temperature of the EVOH resin may be, for example, 120°C to 250°C, 140°C to 250°C, 140°C to 240°C, 140°C to 230°C, or 140°C to 220°C.

When the extrusion temperature of the PHA resin and that of the EVOH resin are different from each other, the difference in extrusion temperature may be 50°C or less, 40°C or less, or 30°C or less.

In addition, according to an embodiment of the present invention, when the substrate layer comprises paper, and the biodegradable resin layer and the barrier layer are formed on the substrate layer, it may be necessary to carefully control the temperature during melt co-extrusion to enable extrusion bonding in the lowest melt temperature zone. Otherwise, there may be difficulty in achieving the object of the present invention due to deformation and partial incineration of the paper, which is the substrate layer.

In addition, after the melt co-extrusion, stretching, thermal treatment (heat setting), and/or drying may be further carried out. Process conditions used in the present art can be used as the process conditions of these steps as long as the effects desired in the present invention are not impaired.

Meanwhile, according to an embodiment of the present invention, the PHA resin may comprise a first PHA resin and a second PHA resin. In such a case, the first PHA resin, the second PHA resin, and the EVOH resin may be melt co-extruded. That is, the three types of resins may be melt co-extruded to form a first resin layer, a second resin layer, and an EVOH resin layer on the substrate layer. In such an event, the arrangement and order of each resin layer may be designed in various ways depending on the desired purpose.

The types and specific characteristics of the first PHA resin and the second PHA resin are as described above.

In addition, at least one polymer resin selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), thermoplastic starch (TPS), polypropylene (PP), polyethylene terephthalate (PET), and polyethylene (PE) may be used to be melt co-extruded with the first PHA resin, the second PHA resin, and the EVOH resin to form a first resin layer, a second resin layer, an EVOH resin layer, and a polymer resin layer on the substrate layer. In such an event, the arrangement and order of each resin layer may be designed in various ways depending on the desired purpose.

In addition, the biodegradable resin layer, the polymer resin layer, and/or the EVOH resin layer may further comprise at least one additive selected from the group consisting of slip agents, antioxidants, crosslinking agents, nucleating agents, fillers, stabilizers, and compatibilizers. Specific types and contents thereof are as described above.

In the process for preparing a biodegradable multilayer film, when the biodegradable resin layer and the barrier layer are formed by melt co-extrusion, the weight (content) of the barrier layer relative to the biodegradable multilayer film can be minimized, while achieving excellent barrier properties to moisture and oxygen. In particular, when paper is used as the substrate layer and the biodegradable resin layer and barrier layer are melt co-extruded on the paper, it is possible to provide an efficient biodegradable multilayer film that has optimal barrier properties (blocking effect) to moisture and oxygen and that can be biodegraded in soil or sea.

Meanwhile, the process for preparing a biodegradable multilayer film according to another embodiment of the present invention may comprise melt-extruding a PHA resin and an EVOH resin, respectively, to prepare a PHA film and an EVOH film, respectively, and laminating them on a substrate layer to form a biodegradable resin layer and a barrier layer.

In the process, the PHA resin and the EVOH resin are melt extruded, respectively, to prepare a PHA film and an EVOH film, respectively, which are then laminated on a substrate layer to form a biodegradable resin layer and a barrier layer, wherein the lamination may be carried out by forming an adhesive layer between the substrate layer, the biodegradable resin layer, and the barrier layer.

The type, thickness, and arrangement of the adhesive layer are as described above.

During the melt extrusion, the extrusion temperatures of the PHA resin and the EVOH resin may be individually controlled.

Specifically, the extrusion temperature of the PHA resin and the extrusion temperature of the EVOH resin may be the same or different.

The extrusion temperature of the PHA resin may be, for example, 120°C to 250°C, for example, 120°C to 200°C, for example, 140°C to 200°C, for example, 140°C to 190°C, for example, 140°C to 180°C, or, for example, 140°C to 170°C.

The extrusion temperature of the EVOH resin may be, for example, 120°C to 250°C, for example, 140°C to 250°C, for example, 140°C to 240°C, for example, 140°C to 230°C, or, for example, 140°C to 220°C.

When the extrusion temperatures of the PHA resin and the EVOH resin are different from each other, the difference in extrusion temperature may be 50°C or less, 40°C or less, or 30°C or less.

Thereafter, the PHA resin and the EVOH resin may be extruded, respectively, and then bonded using an adhesive layer for lamination.

### Environmentally friendly packaging material

According to an embodiment of the present invention, there is provided an environmentally friendly packaging material that comprises the above biodegradable multilayer film.

Specifically, according to an embodiment of the present invention, the environmentally friendly packaging material may comprise the biodegradable multilayer film, wherein the biodegradable multilayer film comprises a substrate layer and a biodegradable resin layer, the biodegradable resin layer comprises a polyhydroxyalkanoate (PHA) resin, the biodegradable resin layer has a heat-sealing strength of 0.5 to 15 kgf/15 mm, and the biodegradable multilayer film has a water vapor transmission rate of 3 g/m²·atm·day or less and an oxygen transmission rate of 10 cc/m²·atm·day or less.

According to another embodiment of the present invention, the environmentally friendly packaging material may comprise the biodegradable multilayer film, wherein the biodegradable multilayer film comprises a substrate layer, a barrier layer, and a biodegradable resin layer, the biodegradable resin layer comprises a polyhydroxyalkanoate (PHA) resin, the biodegradable resin layer has a heat-sealing strength of 0.5 to 15 kgf/15 mm, the barrier layer comprises an ethylene vinyl alcohol (EVOH) resin, and the biodegradable multilayer film has a water vapor transmission rate of 3 g/m²·atm·day or less and an oxygen transmission rate of 10 cc/m²·atm·day or less.

The environmentally friendly packaging material may be in the form of a film that can be used as, for example, general-purpose disposable packaging material and food packaging material. The environmentally friendly packaging material may comprise an air cap.

In addition, the environmentally friendly packaging material can be used in a variety of ways, including pet food packaging, seaweed packaging, nut packaging, dried food packaging, mask pack packaging, feed packaging, and coffee pouches.

The environmentally friendly packaging material may be prepared by further processing the biodegradable multilayer film into a desired shape to suit the desired use. The processing may be carried out by any method known in the art, such as extrusion molding, injection molding, compression molding, pressure molding, blowing or blow molding (e.g., blown film, blowing of foam), calendering, rotomolding, casting (e.g., cast sheet, cast film), or thermoforming.

The environmentally friendly packaging material can be landfilled; thus, even when it is used in large quantities, the risk of environmental pollution is very low as compared with conventional packaging materials. It has excellent moldability and flexibility, whereby it is possible to provide high-quality, biodegradable environmentally friendly packaging material with excellent physical properties and quality.

### Mode for the Invention

Hereinafter, the present invention will be described in detail with reference to Examples. But the following examples are intended to illustrate the present invention, and the scope of the present invention is not limited thereto only.

### <Example>

### Example 1: Multilayer film having a structure of paper/second resin layer (scPHA)/first resin layer (aPHA)/barrier layer (EVOH)

### Step 1: Preparation of a PHA resin and an EVOH resin

As a polyhydroxyalkanoate (PHA) resin, a first PHA resin (3-HB-co-4-HB, aPHA) (manufacturer: CJ, Korea) and a second PHA resin (3-HB-co-4-HB, scPHA) (manufacturer: CJ, Korea) as shown in Table 1 below were prepared, respectively. As an EVOH resin, an ethylene vinyl alcohol (EVOH) resin (H171B, manufacturer: Kuraray) with an ethylene group content of 38% by mole was prepared in the form of pellets.

**[Table 1]**

| | PHA | |
|---|---|---|
| | Second PHA resin (3-HB-co-4-HB, scPHA) | First PHA resin (3-HB-co-4-HB, aPHA) |
| Tg (°C) | -6 | -30 |
| Tc (°C) | 85 | N.D. |
| Tm (°C) | 137 | N.D. |
| Content of a 4-HB repeat unit | 10% by weight of the total weight of the second PHA resin | 45% by weight of the total weight of the first PHA resin |

### Step 2: Formation of a biodegradable resin layer (a second resin layer and a first resin layer) and a barrier layer on a substrate layer by melt co-extrusion

Using a T-die triple coextrusion laminator, the EVOH resin, the first PHA resin (aPHA), and the second PHA resin (scPHA) prepared in step 1 were charged to each of extruders A, B, and C in that order. Paper (manufacturer: Moorim) was used as a substrate layer. The EVOH resin, the first PHA resin (aPHA), and the second PHA resin (scPHA) were melt co-extruded (triple extruded) such that the second resin layer containing the second PHA resin (scPHA) was brought into contact with the substrate layer. The temperature of the melt co-extrusion was set to 240°C, 160°C, and 160°C for the EVOH resin, the first PHA resin (aPHA), and the second PHA resin (scPHA), respectively.

The biodegradable multilayer film had a structure of paper (83 µm)/second resin layer (scPHA) (15 µm)/first resin layer (aPHA) (15 µm)/barrier layer (EVOH) (8 µm) and a total thickness of 121 µm.

### Example 2: Multilayer film having a structure of paper/first resin layer (aPHA)/second resin layer (scPHA)/barrier layer (EVOH)

A multilayer film having a structure of paper (83 µm)/first resin layer (aPHA) (15 µm)/second resin layer (scPHA) (15 µm)/barrier layer (EVOH) (8 µm) and a total thickness of 121 µm was obtained in the same manner as in Example 1, except that the EVOH resin, the second PHA resin (scPHA), and the first PHA resin (aPHA) were charged to extruders A, B, and C in that order in step 2 of Example 1; and that melt co-extrusion was carried out such that the first resin layer containing the first PHA resin (aPHA) was brought into contact with the substrate layer.

### Example 3: Multilayer film having a structure of paper/barrier layer (EVOH)/first resin layer (aPHA)/second resin layer (scPHA)

A multilayer film having a structure of paper (83 µm)/barrier layer (EVOH) (8 µm)/first resin layer (aPHA) (15 µm)/second resin layer (scPHA) (15 µm) and a total thickness of 121 µm was obtained in the same manner as in Example 1, except that the second PHA resin (scPHA), the first PHA resin (aPHA), and the EVOH resin were charged to extruders A, B, and C in that order in step 2 of Example 1; and that melt co-extrusion was carried out such that the barrier layer containing the EVOH resin was brought into contact with the substrate layer.

### Example 4: Multilayer film having a structure of paper/first resin layer (aPHA)/barrier layer (EVOH)/second resin layer (scPHA)

A multilayer film having a structure of paper (83 µm)/first resin layer (aPHA) (15 µm)/barrier layer (EVOH) (8 µm)/second resin layer (scPHA) (15 µm) and a total thickness of 121 µm was obtained in the same manner as in Example 1, except that the second PHA resin (scPHA), the EVOH resin, and the first PHA resin (aPHA) were charged to extruders A, B, and C in that order in step 2 of Example 1; and that melt co-extrusion was carried out such that the first resin layer containing the first PHA resin (aPHA) was brought into contact with the substrate layer.

### Example 5: Paper/EVOH/second resin layer (scPHA)

A multilayer film having a structure of paper (83 µm)/barrier layer (EVOH) (8 µm)/second resin layer (scPHA) (15 µm) and a total thickness of 106 µm was obtained in the same manner as in Example 1, except that the second PHA resin (scPHA) and the EVOH resin were charged to extruders A and B in that order in step 2 of Example 1; and that melt co-extrusion was carried out such that the barrier layer containing the EVOH resin was brought into contact with the substrate layer.

### Example 6: Multilayer film having a structure of paper/first resin layer (aPHA)/barrier layer (EVOH)/second resin layer (scPHA) (lamination)

In step 2 of Example 1, the EVOH resin was melt-extruded at 240°C in the extruder to form a barrier film (barrier layer), the second PHA resin (scPHA) was melt-extruded at 160°C to form a second resin film (second resin layer), and the first PHA resin (aPHA) was melt-extruded at 160°C to form a first resin film (first resin layer).

Paper (manufacturer: Moorim) was used as a substrate layer. The respective films prepared above were laminated on the substrate layer to have a structure of paper/first resin layer (aPHA)/barrier layer (EVOH)/second resin layer (scPHA). In such an event, each layer was bonded using an adhesive solution. As a result, a multilayer film having a structure of paper (83 µm)/first resin layer (aPHA) (15 µm)/barrier layer (EVOH) (8 µm)/second resin layer (scPHA) (15 µm) was obtained.

### Example 7: Multilayer film having a structure of paper/barrier layer (EVOH)/first resin layer (aPHA)/second resin layer (scPHA) (lamination)

A multilayer film was obtained in the same manner as in Example 6, except that the lamination order was changed in Example 6 to have a structure of paper (83 µm)/barrier layer (EVOH) (8 µm/first resin layer (aPHA) (15 µm)/second resin layer (scPHA) (15 µm).

### Comparative Example 1: Multilayer film having a structure of polyethylene terephthalate (PET)/thin aluminum layer/nylon layer/cast polypropylene (CPP) layer (lamination)

A multilayer film was obtained in the same manner as in Example 6, except that the multilayer film was formed to have a structure of polyethylene terephthalate (PET)/thin aluminum layer/nylon layer/cast polypropylene (CPP) layer.

### Comparative Example 2: Multilayer film having a structure of substrate layer/CPP layer

A multilayer film was obtained in the same manner as in Example 1, except that the multilayer film was formed to have a structure of a substrate layer and a cast polypropylene (CPP) layer using a CPP resin.

### Comparative Example 3: Multilayer film having a structure of substrate layer/LDPE layer

A multilayer film was obtained in the same manner as in Comparative Example 2, except that the multilayer film was formed to have a structure of a substrate layer and a low-density polyethylene (LDPE) layer using an LDPE resin instead of the cast polypropylene (CPP) resin.

### Comparative Example 4: Multilayer film having a structure of substrate layer/LLDPE layer

A multilayer film was obtained in the same manner as in Comparative Example 2, except that the multilayer film was formed to have a structure of a substrate layer and a linear low-density polyethylene (LLDPE) layer using an LLDPE resin instead of the cast polypropylene (CPP) resin.

### Comparative Example 5: Multilayer film having a structure of paper/EVOH/PBAT layers

A multilayer film having a structure of paper (83 µm)/barrier layer (EVOH) (8 µm)/polybutylene adipate terephthalate (PBAT) layer (15 µm) was obtained in the same manner as in Example 5 using a PBAT resin (Ankor Bioplastics) instead of the second PHA resin (scPHA) in Example 5.

### Evaluation Example

### Evaluation Example 1

In order to inspect the thermal adhesiveness of the multilayer films obtained in the Examples and Comparative Examples, a heat-sealing method was used. Heat-sealing strength was measured to evaluate the peeling of the thermally bonded area.

The heat-sealing strength was measured using an LD5 universal tensile tester of LLOYD at a grip spacing of 50 mm, a speed of 100 mm/minute, and a sample width of 15 mm. The results are shown in Table 2 below.

**[Table 2]**

| | heat-sealing strength (kgf/15 mm) |
|---|---|
| First resin layer (aPHA layer) | 6.5 |
| Second resin layer (scPHA layer) | 5.5 |
| EVOH | 2.2 |

As can be seen from Table 2 above, the heat-sealing strength of the first resin layer (aPHA layer) and that of the second resin layer (scPHA layer) were about 6.5 kgf/15 mm and about 5.5 kgf/15 mm, respectively; and the heat-sealing strength of the EVOH layer was about 2.2 kgf/15 mm. The heat-sealing strength of each layer was excellent.

### Evaluation Example 2

The water vapor transmission rate and oxygen transmission rate of the multilayer films obtained in the Examples and Comparative Examples were measured under the following conditions.

The water vapor transmission rate (WVTR) was measured at 38 ± 0.5°C and 90 ± 2% relative humidity using a Permatran-w3/33 water vapor transmission rate meter of Mocon.

The oxygen transmission rate (OTR) was measured at 23 ± 0.5°C using an OX2-TRAN 2/12 oxygen transmission rate meter of Mocon.

The water vapor transmission rate, oxygen transmission rate, and biodegradability of the multilayer films obtained in the Examples and Comparative Examples are summarized in Table 3 below.

**[Table 3]**

| | Structure | Process | WVTR (g/m²·atm·day) | OTR (cc/m²·atm·day) | Biodegradability |
|---|---|---|---|---|---|
| Ex. 1 | Paper/scPHA layer/aPHA layer/EVOH | Co-extrusion | 0.54 | 0.29 | Soil, sea |
| Ex. 2 | Paper/aPHA layer/scPHA layer/EVOH | Co-extrusion | 0.51 | 0.25 | Soil, sea |
| Ex. 3 | Paper/EVOH/aPHA layer/scPHA layer | Co-extrusion | 0.38 | 0.20 | Soil, sea |
| Ex. 4 | Paper/aPHA layer/EVOH/scPHA layer | Co-extrusion | 0.38 | 0.17 | Soil, sea |
| Ex. 5 | Paper/EVOH/scPHA layer | Co-extrusion | 1.56 | 0.29 | Soil, sea |
| Ex. 6 | Paper/aPHA layer/EVOH/scPHA layer | Lamination | 2.55 | 0.33 | Soil, sea |
| Ex. 7 | Paper/EVOH/aPHA layer/scPHA layer | Lamination | 2.39 | 0.39 | Soil, sea |
| C. Ex. 1 | PET/thin aluminum layer/nylon layer/CPP layer | Lamination | 0.09 | 0.10 | No |
| C. Ex. 2 | Paper/CPP layer | Extrusion | 7.5 | 1,000 ↑ | No |
| C. Ex. 3 | Paper/LDPE layer | Extrusion | 6.0 | 1,000 ↑ | No |
| C. Ex. 4 | Paper/LLDPE layer | Extrusion | 4.5 | 1,000 ↑ | No |
| C. Ex. 5 | Paper/EVOH/PBAT | Extrusion | 4.5 | 0.40 | No |

As can be seen from Table 3 above, the multilayer films of Examples 1 to 7, unlike the multilayer films of Comparative Examples 1 to 5, were biodegradable in both soil and sea, and the water vapor transmission rate and oxygen transmission rate thereof were significantly low.

Specifically, the multilayer films of Examples 1 to 7 had a water vapor transmission rate of 0.38 to 2.55 g/m²·atm·day and an oxygen transmission rate of 0.17 to 0.39 cc/m²·atm·day.

In contrast, the multilayer films of Comparative Examples 2 to 4 had a water vapor transmission rate of 4.5 g/m²·atm·day or more and an oxygen transmission rate of 1,000 cc/m²·atm·day or more. The water vapor transmission rate and oxygen transmission rate were significantly increased as compared with those of the multilayer films of Examples 1 to 7.

In addition, the multilayer film of Comparative Example 1 had a water vapor transmission rate and an oxygen transmission rate of 0.09 g/m²·atm·day and 0.10 cc/m²·atm·day, respectively, whereas it was not biodegradable in both soil and sea.

Further, in the multilayer film of Comparative Example 5, the biodegradable resin layer contained a PBAT resin alone without a PHA resin. Thus, the water vapor transmission rate was 4.5 g/m²·atm·day, which was increased as compared with the water vapor transmission rate of the multilayer films of Examples 1 to 7. It was not biodegradable in both soil and sea.

Further, it is confirmed that the water vapor transmission rate and oxygen transmission rate of the multilayer films of Examples 1 to 7 vary significantly depending on the lamination order.

In particular, the multilayer film of Example 4 having a structure of paper/first resin layer (aPHA layer)/barrier layer (EVOH layer)/second resin layer (scPHA layer) had a water vapor transmission rate of 0.38 g/m²·atm·day and an oxygen transmission rate of 0.17 cc/m²·atm·day. The water vapor transmission rate and oxygen transmission rate were significantly lower than those of the multilayer films of Comparative Examples 2 to 5, and it was biodegradable in both soil and sea.

### [Explanation of Reference Numerals]

1: biodegradable multilayer film
11: biodegradable resin layer
12: barrier layer
13: substrate layer
14: first resin layer
15: second resin layer
16: first adhesive layer
17: second adhesive layer

## Claims

1. A biodegradable multilayer film, which comprises a substrate layer and a biodegradable resin layer, wherein the biodegradable resin layer comprises a polyhydroxyalkanoate (PHA) resin, the biodegradable resin layer has a heat-sealing strength of 0.5 to 15 kgf/15 mm, and the biodegradable multilayer film has a water vapor transmission rate of 3 g/m²·atm·day or less and an oxygen transmission rate of 10 cc/m²·atm·day or less.

2. The biodegradable multilayer film of claim 1, wherein the biodegradable multilayer film further comprises a barrier layer, and the barrier layer comprises an ethylene vinyl alcohol (EVOH) resin.

3. The biodegradable multilayer film of claim 1, wherein the polyhydroxyalkanoate (PHA) resin is a polyhydroxyalkanoate copolymer resin comprising a 4-hydroxybutyrate (4-HB) repeat unit, and the polyhydroxyalkanoate copolymer resin comprises the 4-hydroxybutyrate (4-HB) repeat unit in an amount of 0.1 to 60% by weight based on the total weight of the polyhydroxyalkanoate copolymer resin.

4. The biodegradable multilayer film of claim 2, wherein the biodegradable resin layer comprises a first resin layer and a second resin layer,
the first resin layer comprises a first PHA resin comprising a 4-hydroxybutyrate (4-HB) repeat unit in an amount of 15% by weight to 60% by weight,
the second resin layer comprises a second PHA resin comprising a 4-hydroxybutyrate (4-HB) repeat unit in an amount of 0.1% by weight to 30% by weight, and
the first PHA resin and the second PHA resin are different from each other in terms of the content of a 4-HB repeat unit.

5. The biodegradable multilayer film of claim 4, wherein the first PHA resin has a glass transition temperature (Tg) of -45°C to -10°C,
the second PHA resin satisfies at least one characteristic selected from a glass transition temperature (Tg) of -30°C to 80°C, a crystallization temperature (Tc) of 70°C to 120°C, and a melting temperature (Tm) of 100°C to 170°C, and
the glass transition temperature (Tg) of the first PHA resin and the glass transition temperature (Tg) of the second PHA resin are different from each other.

6. The biodegradable multilayer film of claim 2, wherein the barrier layer and the biodegradable resin layer are formed by co-extrusion on the substrate layer or are formed by lamination on the substrate layer.

7. The biodegradable multilayer film of claim 4, wherein the biodegradable multilayer film comprises a structure of:
substrate layer/barrier layer/first resin layer/second resin layer;
substrate layer/barrier layer/second resin layer/first resin layer;
substrate layer/first resin layer/barrier layer/second resin layer;
substrate layer/second resin layer/barrier layer/first resin layer;
substrate layer/first resin layer/second resin layer/barrier layer; or
substrate layer/second resin layer/first resin layer/barrier layer.

8. The biodegradable multilayer film of claim 7, wherein the substrate layer comprises at least one selected from the group consisting of paper, a polyethylene terephthalate (PET) film, a polyimide (PI) film, a polypropylene (PP) film, and a polyethylene (PE) film.

9. The biodegradable multilayer film of claim 8, wherein the substrate layer comprises paper, and the biodegradable multilayer film has a structure of substrate layer/first resin layer/barrier layer/second resin layer; or substrate layer/second resin layer/barrier layer/first resin layer.

10. The biodegradable multilayer film of claim 1, wherein the biodegradable multilayer film further comprises an adhesive layer, and the adhesive layer comprises at least one selected from the group consisting of polyhydroxyalkanoate (PHA), polysilicone-based compounds, polyvinyl alcohol (PVA), ethylene vinyl acetate (EVA), acrylic resins, and urethane-based resins.

11. The biodegradable multilayer film of claim 1, wherein the biodegradable multilayer film further comprises at least one polymer resin layer that comprises at least one selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), thermoplastic starch (TPS), polypropylene (PP), polyethylene terephthalate (PET), and polyethylene (PE).

12. The biodegradable multilayer film of claim 1, wherein the biodegradable resin layer further comprises at least one additive selected from the group consisting of slip agents, antioxidants, crosslinking agents, nucleating agents, fillers, stabilizers, and compatibilizers.

13. The biodegradable multilayer film of claim 1, wherein the biodegradable resin layer further comprises at least one biodegradable resin selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and thermoplastic starch (TPS).

14. The biodegradable multilayer film of claim 2, wherein the biodegradable multilayer film has a thickness of 30 µm to 350 µm, the barrier layer accounts for 10% or less of the thickness of the biodegradable multilayer film, and the thickness ratio of the biodegradable resin layer and the barrier layer is 1:0.1 to 0.5.

15. The biodegradable multilayer film of claim 4, wherein the thickness ratio of the first resin layer to the second resin layer is 1:0.5 to 1.5.

16. The biodegradable multilayer film of claim 4, wherein the barrier layer has a heat-sealing strength of 0.5 to 10 kgf/15 mm, the first resin layer has a heat-sealing strength of 1 to 15 kgf/15 mm, and the second resin layer has a heat-sealing strength of 1 to 12 kgf/15 mm.

17. A process for preparing a biodegradable multilayer film, which comprises:
melt-extruding a polyhydroxyalkanoate (PHA) resin to form a biodegradable resin layer on a substrate layer,
wherein the biodegradable resin layer has a heat-sealing strength of 0.5 to 15 kgf/15 mm, and
the biodegradable multilayer film has a water vapor transmission rate of 3 g/m²·atm·day or less and an oxygen transmission rate of 10 cc/m²·atm·day or less.

18. The process for preparing a biodegradable multilayer film of claim 17, wherein the process further comprises melt-extruding an ethylene vinyl alcohol (EVOH) resin to form a barrier layer, and
the biodegradable resin layer and the barrier layer are formed by melt-co-extruding the polyhydroxyalkanoate (PHA) resin and the ethylene vinyl alcohol (EVOH) resin on the substrate layer, or by melt-extruding each of them and laminating them on the substrate layer.

19. The process for preparing a biodegradable multilayer film of claim 18, wherein the biodegradable resin layer and the barrier layer are formed on the substrate layer by melt co-extrusion, and the melt co-extrusion is carried out at a temperature of 120°C to 250°C.

20. The process for preparing a biodegradable multilayer film of claim 18, wherein the biodegradable resin layer and the barrier layer are formed on the substrate layer by lamination, and the lamination is carried out by forming an adhesive layer between the substrate layer, the biodegradable resin layer, and the barrier layer.

21. The process for preparing a biodegradable multilayer film of claim 17, wherein the polyhydroxyalkanoate (PHA) resin comprises a first PHA resin and a second PHA resin,
the first PHA comprises a 4-hydroxybutyrate (4-HB) repeat unit in an amount of 15% by weight to 60% by weight based on the total weight of the first PHA resin,
the second PHA comprises a 4-hydroxybutyrate (4-HB) repeat unit in an amount of 0.1% by weight to 30% by weight based on the total weight of the second PHA resin, and
the first PHA resin and the second PHA are different from each other in terms of the content of a 4-HB repeat unit.

22. An environmentally friendly packaging material, which comprises the biodegradable multilayer film of any one of claims 1 to 16.
